**Europäisches Patentamt**

**European Patent Office**

**Office européen des brevets**

(19)

(11) Veröffentlichungsnummer: **0 200 802**
**B1**

# EUROPÄISCHE PATENTSCHRIFT

(12)

(45) Veröffentlichungstag der Patentschrift:
02.08.89

(21) Anmeldenummer: **85105643.2**

(22) Anmeldetag: **06.05.85**

(51) Int. Cl.⁴: **G 05 D 16/20,** G 05 D 16/06

(54) **Elektrisches Ventil.**

(43) Veröffentlichungstag der Anmeldung:
**12.11.86 Patentblatt 86/46**

(45) Bekanntmachung des Hinweises auf die Patenterteilung:
**02.08.89 Patentblatt 89/31**

(84) Benannte Vertragsstaaten:
**DE FR GB IT NL SE**

(56) Entgegenhaltungen:
**EP-A-0 147 589**
**DE-A-1 258 166**

(73) Patentinhaber: **Scholz, Joachim Dipl.- Ing., An der Ziegelei 14, D-7551 Bischweier (DE)**

(72) Erfinder: **Scholz, Joachim Dipl.- Ing., An der Ziegelei 14, D-7551 Bischweier (DE)**

(74) Vertreter: **Patentanwälte Dr. Solf & Zapf, Schlossbleiche 20 Postfach 13 01 13, D-5600 Wuppertal 1 (DE)**

LIBER, STOCKHOLM 1989

EP 0 200 802 B1

**Beschreibung**

Die Erfindung bezieht sich auf ein kraftgesteuertes Druckregelventil bzw. elektrisch steuerbares Ventil.

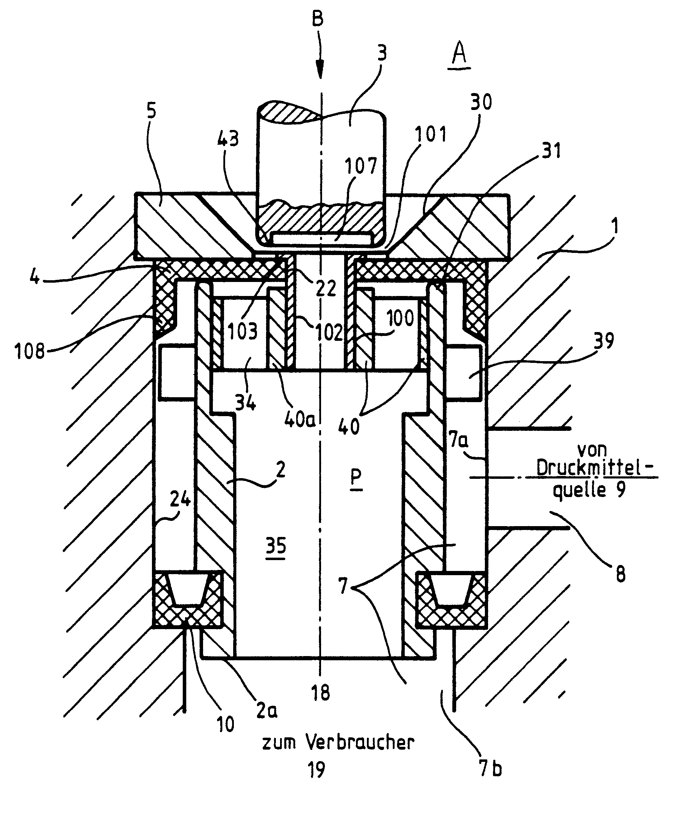

In der älteren europäischen Patentanmeldung EP-A-0 147 589, die nur nach Artikel 54 (3) EPÜ zum stand der Technik gehört, ist ein elektrisches Ventil gemäß Oberbegriff von Anspruch 1 beschrieben. Dieses elektrische Ventil dient zum Steuern eines insbesondere gasförmigen Fluids zwischen einer Fluidquelle mit entsprechendem, relativ hohem Druck, einem Verbraucher und einer Fluidentlastung mit entsprechendem, relativ niederem Druck. Wesentlichste Bestandteile dieses Ventiles sind ein Ventilgehäuse mit Anschlüssen für die Fluidquelle, den Verbraucher und die Fluidentlastung, einem in dem Gehäuse zur Steuerung der Anschlüsse verstellbaren Ventilglied und einem über eine Membrane in besonderer Weise auf das Ventilglied einwirkenden Steuerkolben, auf den eine Fremdkraft einwirkt, deren Größe den im Verbraucher herrschenden Druck bestimmt. Durch seine Ausgestaltung wirkt also das Ventil nicht nur als digitale Auf-Zu-Steuerung, um den Verbraucher zu entlüften (Anschluß an die Fluidentlastung) oder in ihm einen dem Druck in der Fluidquelle entsprechenden Druck herrschen zu lassen (Anschluß an die Fluidquelle), sondern das Ventil ermöglicht in analoger Arbeitsweise die Einstellung jedes beliebigen Druckes im Verbraucher bis zum Druck in der Fluidquelle als Maximaldruck allein durch Bemessung der auf den Steuerkolben einwirkenden Fremdkraft. Auf die Merkmale des bereits vorgeschlagenen Ventiles im Einzelnen wird im Zusammenhang mit der späteren Einzelbeschreibung der Erfindung anhand, der Zeichnung eingegangen.

Wesentlich ist im Rahmen der allgemeinen Erörterung der Erfindung folgendes.

Der von der auf den Steuerkolben aufgebrachten Fremdkraft bestimmte Druck kommt dadurch zustande, daß zwischen Ent- und Belüftungszustand sich ein Gleichgewichtszustand einstellt, indem der Druck im Innenraum des Ventilgliedes der Fremdkraft entspricht und dieser entgegenwirkt. Dies ist beim vorgeschlagenen Ventil dadurch zu erreichen, daß im Deckel des Ventilgliedes ein Lochkranz vorgesehen ist, durch den beim Belüften des Verbrauchers die Verbindung zwischen Fluidquelle und Verbraucher, beim Entlüften des Verbrauchers die Verbindung zwischen Verbraucher und Entlüftung hergestellt wird und es im Gleichgewichtszustand, dem Fluid im Innenraum des Ventilgliedes ermöglicht wird, den Gegendruck zur Fremdkraft zur Wirkung zu bringen. Diese Lösung setzt eine verhältnismäßig feine Abstimmung des Abstandes zwischen dem Deckel des Ventilgliedes und der Membranunterseite voraus, was aus verschiedenen Gründen unerwünscht sein kann. Aufgabe der Erfindung ist es, die bereits vorgeschlagene Lösung so weiter auszugestalten, daß der Fluiddruck im Innenraum des Ventilgliedes während des Gleichgewichtszustades mit einfachen Mitteln und zuverlässig zur Wirkung gegen die auf den Steuerkolben wirkende Fremdkraft gebracht werden kann. Bei der Lösung dieser Aufgabe soll eine Zentralöffnung im Deckel des Ventilgliedes innerhalb des dort vorgesehenen und oben erwähnten Lochkranzes genutzt werden, die bei der älteren Lösung bereits vorgesehen ist, ohne daß ihr aber erkennbar eine bestimmte Funktion zugewiesen wäre. Demzufolge wird mit der vorliegenden Erfindung vorgeschlagen, daß eine vom Widerlager umschlossene zentrale Öffnung so groß ist, daß ihr Querschnitt zusammen mit dem Querschnitt des Strömungskanales zwischen Widerlager und zweitem Rand des Ventilgliedes etwa dem Querschnitt des Strömungskanales zwischen Steuerkolben und Außenwand des Strömungskanales entspricht.

Während bei der älteren EP-A-0 147 589 für den Gleichgewichtszustand gewährleistet sein muß, daß zwischen dem Lochkranz und dem zum Fluidentlastungsbereich führenden Ringspalt zwischen Steuerkolben und Entlastungsbereich unterhalb der elastischen Membrane keine zu starke Drosselung eintritt, ist dieses Problem bei erfindungsgemäßer Bemessung der Zentralöffnung nicht gegeben, durch die Zentralöffnung hindurch ist immer eine ausreichend drosselarme Verbindung möglich, so daß ohne besonderen Aufwand der gewollte Gleichgewichtszustand gehalten werden kann. Darüberhinaus bietet die Erfindung den Vorteil, daß eine extrem schnelle Entlüftung des Verbrauchers möglich ist. Vorzugsweise soll der Querschnitt der vom Widerlager Umschlossenen Öffnung mindestens etwa dem Querschnitt des Strömungskanales zwischen Steuerkolben und Außenwand des Strömungskanales entsprechen.

Die Erfindung ermöglicht eine weitere Zweckmäßige Ausgestaltung der Erfindung derart, daß ein Anschlag für das Zurückfedern der Membrane in noch zu beschreibender Weise besonders Zweckmäßig angeordnet werden kann. Dieser Anschlag soll, wenn der Deckel des Ventilkörpers als Anschlag bei der Deformation der Membrane in einer Richtung auf der einen Seite der Membrane angeordnet ist, auf der anderen Seite der Membrane angeordnet, aber am Deckel gehalten sein. Dies geschieht in besonders einfacher Weise dadurch, daß der Anschlag ein Radialflansch am einen Ende einer Hülse ist, die in der erfindugnsgemäß ausgestalteten Zentralöffnung gehalten ist. Dadurch ist eine Verbindung zwischen Innenraum des Ventilgliedes und Entlastungsbereich über den Lochkranz nur noch schwer zu bewerkstelligen, während bei der erfindungsgemäßen Lösung insoweit kein Problem zu erwarten ist, Wenn nur die Zentralbohrung bzw. die Hülse entsprechend bemessen sind.

Nachfolgend wird die Erfindung anhand der Zeichnung näher erläutert. In der Zeichnung ist ein erfindungsgemäßes Ventil als Mittellängsschnitt dargestellt.

Das erfindungsgemäße, kraftgesteuerte Druckregelventil ist zwischen einer Druckmittelquelle 9 für ein beliebiges, insbesondere jedoch pneumatischen Fluid, beispiels beispielsweise einem Drucklufttank und einem Verbraucher 19, beispielsweise dem Stellzylinder der Druckluftbremse eines Fahrzeuges angeordnet. Das Ventilgehäuse 1 des Druckregelventiles weist einen Druckmitteleingang 8, einen ersten Druckmittelausgang 18 zum Verbraucher 19 und einen zweiten Druckmittelausgang zum Umgebungsmedium, beispielsweise zur Umgebungsluft auf. Der zweite Druckmittelausgang besteht im wesentlichen aus dem radialen Spiel zwischen einer angesenkten Bohrung 30 und einem Steuerkolben 3.

In einer, als Belüftungsstellung bezeichneten Betriebsstellung des Ventiles ist die Druckmittelquelle 9 durch das Ventil mit dem Verbraucher 19 verbunden, um diesen mit Druckfluid, also beispielsweise Druckluft, aus der Druckmittelquelle 9 zu füllen. In einer anderen, als Entlüftungsstellung bezeichneten Betriebsstellung des Ventiles ist der Verbraucher 19 an das Umgebungsmedium angeschlossen, um entlüftet zu werden. Dabei sperrt das Ventil die Druckmittelquelle 9, um deren Entleeren zu verhindern.

Der Druck, der im Verbraucher 19 durch Zuführung von Druckmittel aus der Druckmittelquelle 9 maximal erzeugt werden kann, ist der in der Druckmittelquelle 9 tatsächlich herrschende Druck. Welcher Druck sich im Verbraucher 19 als Teildruck des in der Druckmittelquelle 9 herrschenden Druckes tatsächlich einstellt, ist abhängig von einer Kraft B, die als Steuersignal zwangsweise auf den Steuerkolben 3 in Richtung der Längsachse desselben zur Wirkung gebracht wird, beispielsweise mittels eines Elektromagneten.

Die Längsachsen von Druckmitteleingang 8 und Druckmittelausgang 18 schneiden einander unter einem Winkel von 90°. Druckmitteleingang 8 und Druckmittelausgang 18 münden in eine Vorratskammer 7, die achsgleich zum Druckmittelausgang 18 im Gehäuse 1 angeordnet, von einer Wand 24 des Gehäuses 1 umschlossen ist und Teil einer Bohrung ist, die das Gehäuse 1 von einem zum anderen Ende, von beiden Seiten her nach einwärts gestuft, durchdringt. Die Vorratskammer 7 ist an dem dem Druckmittelausgang 18 gegenüberliegenden Ende durch eine Steuermembrane 4 aus einem Elastomer verschlossen, die mit dem größeren Teil ihrer Außenseite an einem Deckel 5 des Gehäuses 1 anliegt. Der Deckel 5 ist mittels Schrauben (nicht gezeichnet) am Gehäuse 1 festgelegt. In dem Deckel 5 ist achsgleich zur Vorratskammer 7 die angesenkte Bohrung 30 angeordnet, in der Steuermembrane 4 ist ebenfalls achsgleich zu der Vorratskammer 7 eine Bohrung 22 angeordnet. Der an die Bohrung 30 anschließende Raum ist deutlich größer als der Querschnitt der zylindrischen Vorratskammer 7, der Querschnitt der Bohrung 22 der Steuermembrane 4 ist deutlich kleiner als der Querschnitt der Vorratskammer 7; der kleinere Querschnitt der Bohrung 30 ist der Bohrung 22 zugekehrt und größer als der Querschnitt der Bohrung 22, der größere Querschnitt der Bohrung 30 ist dem an die Bohrung anschließenden größeren Raum A (Umgebung des Ventiles) zugekehrt.

In der Vorratskammer 7 ist das Ventilglied 2 angeordnet, das im wesentlichen eine zylindrische Hülse ist, die am oberen Ende mit einem Deckel 40 verschlossen ist und am Außenumfang mit gleichmäßig auf deisen verteilten Nasen 39 versehen ist, mit denen das Ventilglied 2 radial spiellos aber axial verstellbar in der zylindrischen Vorratskammer 7 geführt ist. Der Deckel 40 hat einen Zentralkörper (40a) und weist nahe seinem Außenrand gleichmäßig auf den Umfang verteilt, eine Anzahl Axialbohrungen 34 sowie zentral eine weitere Axialbohrung 100 auf. An seinem unteren Ende weist das Ventilglied 2 eine Ringnut auf, in die ein im Querschnitt U-förmiger Ring 10 eingesetzt ist, der aus elastisch nachgiebigem Material besteht und über den sich das Ventilglied 2 auf einer Stufe der Wand 24 abstützt.

In der dargestellten Betriebsstellung des erfindungsgemäßen Ventiles liegt das Ventilglied mit seinem oberen abgerundeten Rand 31 als Dichtfläche an der Unterseite der Steuermembrane 4 an. Der Druckmitteleingang 8 steht mit dem über dem Ring 10 liegenden Teil 7a der Vorratskammer 7 in Verbindung, dieser Teil 7a ist jedoch durch den Ring 10 und das Anliegen des Ventilgliedes 2 mit seinem Rand 31 an der Unterseite der Steuermembrane 4 vom Druckmittelausgang 18 abgesperrt. Andererseits steht der Druckmittelausgang 18 über den unter dem Ring 10 liegenden Teil 7b der Vorratskammer 7 mit dem Innenraum 35 des Ventilgliedes 2 in Verbindung, der über die Axialbohrungen 34, die zentrische Bohrung 100, die Bohrung 22 der Steuermembrane 4 und den Ringspalt 101 zwischen dem Steuerkolben 3 und der Bohrung 30 mit der Umgebung des Ventiles in Verbindung steht.

Damit ist die dargestellte Betriebsstellung des Ventiles als die Betriebsstellung ausgewiesen, in der der Verbraucher 19 entlüftet ist. Im Verbraucher 19 eingeschlossenes Fluid kann über das Ventil aus dem Verbraucher 19 entweichen. Die Druckmittelquelle 9 ist vom Verbraucher 19 getrennt.

Soll der Verbraucher 19 belüftet werden, so ist er stattdessen mit der Druckmittelquelle 9 zu verbinden. Um das Ventil in die entsprechende Betriebsstellung zu bringen, wird auf den Steuerkolben 3 eine gegen das Ventil gerichtete Steuerkraft aufgebracht, deren Größe entsprechend dem im Verbraucher 19 gewünschten Druck gewählt wird. Diese Steuerkraft verstellt den Steuerkolben 3 in das Ventil hinein, bis er mit seinem inneren abgerundeten Rand 43 als Dichtkante auf dem inneren, freien Randbereich der Steuermembrane 4 zunächst zur Anlage kommt und diesen beim weiteren Verstellen nach innen verformt. Bei der weiteren Verstellbewegung des Steuerkolbens wird das zunächst vorliegende Axialspiel zwischen Steuermembrane und innerem Bund des Deckels 40 überwunden und bei der noch weiteren Verstellbewegung des Steuerkolbens 3 wird das Ventilglied 2 nach innen verstellt, so daß es sich mit seinem Rand 31 von der Steuermembrane 4 löst. Das Auftreffen des Steuerkolbens 3 auf der Steuermembrane 4 beendet den Entlüftungszustand, indem der Ringspalt 101 zwischen Steuerkolben 3 und Rand der Bohrung 30 gesperrt wird. Beim Abheben des Ventilgliedes 2 von der Steuermembrane 4 wird ein Rinspalt freigegeben, der den Teil 7a der Vorratskammer 7 über dem Ring 10 und damit den Fluideinlaß 8 durch die Bohrung 34 mit dem Innenraum 35 des Ventilgliedes 2 und damit mit dem Druckmittelausgang 18 verbindet. Diese Betriebsstellung des erfindungsgemäßen Ventiles ist die Belüstftungsstellung für den Verbraucher 19.

Ist im Innenraum 35 des Ventilgliedes 2 ein Druck erreicht, der der auf den Steuerkolben 3 aufgebrachten Steuerkraft entspricht, und, wird noch weiter Druckfluid zugeführt, so stellt sich unmittelbar der Zustand ein, in dem der Ventilgliedraum 35 von der Vorratskammer 7 bzw. deren Teil 7a getrennt wird, es herrscht ein Gleichgewichtszustand, der Verbraucher ist sowohl vom Auslaß zwischen Steuerkolben 3 und Bohrungswand 30 als auch von der Zuführung 8 abgesperrt.

Zum Entlüften des Verbrauchers 19 wird die Steuerkraft auf den Steuerkolben 3 verringert, dieser bewegt sich unter dem Druck im Ventilgliedinnenraum 35 nach außen, der Innenrand der Steuermembrane folgt und kehrt in die dargestellte Kontur zurück und, wenn sich der Steuerkolben weiter nach außen bewegt, hebt dieser von der Steuermembrane ab und es entweicht Druckfluid, bis der Gleichgewichtszustand erneut erreicht ist.

Die in der älteren europäischen Patentanmeldung EP-A-0 147 589 erwähnte, in ihrer Abmessung und Zweckbestimmung nicht näher erläuterte Bohrung 100 hat nun die Aufgabe, eine Entlüftung des Verbrauchers 19 auch dann zu gewährleisten, wenn dies über die Axialbohrungen 34 nicht oder nur unzulänglich möglich ist. Deshalb ist in erster Annäherung die Summe der Querschnitte der Axialbohrungen 34 und des Querschnittes der Bohrung 100 so bemessen, daß diese Summe zumindest dem Querschnitt des Ringspaltes 101 entspricht, so daß der Verbraucher 19 in dem Maße entlüftet werden kann, wie das aus ihm abströmende Fluid durch den Ringspalt 101 entweichen kann, ohne daß vor dem Ringspalt 101 eine Drosselung stattfindet. Vorzugsweise soll der Querschnitt der Bohrung 100 zumindest etwa dem Querschnitt des Ringspaltes 101 entsprechen, so daß allein durch die Bohrung 100 ein drosselfreies Abströmen des Fluids aus dem Verbraucher möglich ist.

Diese Lösung ist insbesondere für den Fall vorgesehen, daß in die Axialbohrung 100 des Zentralkörpers des Deckels 40, der die Bohrung 100 umschließt und dessen Oberseite erfindungsgemäß unterhalb des oberen Randes 31 liegt, eine Hülse 102 eingesetzt ist, deren oberes Ende als Radialflansch 103 zur Begrenzung des Rückfederns der Membrane 4 beim Hochgehen des Steuerkolbens 3 ausgebildet ist. Dabei ist der freie Querschnitt der Hülse 102 so bemessen, daß er zumindest etwa dem Querschnitt des Ringspaltes 101 entspricht, die Bohrung 100 also entsprechend größer sein muß. Die Hülse 102 ist durch die Bohrung 22 der Membrane 4 hindurchgeführt und der Radialflansch 103 liegt oberhalb der Membrane 4. Bewegt sich der Steuerkolben 3 in der vorbeschriebenen Weise nach unten, so hebt die Membrane 4 von der Unterseite des Radialflansches 103 ab, bis sie auf der Oberseite des Zentralkörpers des Deckels 40 zur Auflage kommt und zum Abheben des Randes 31 von der Membrane 4 des Steuerkolbens 3 über den Innenrand der Membrane und den Zentralkörper des Deckels 40 das Ventilglied 2 nach innen (bezüglich des Ventiles) bzw. nach unten (bezüglich der Bildebene) bewegt. Überwiegt nun der Druck im Innenraum 35 des Ventilgliedes 2 derart die Kraft B, daß sich der Steuerkolben 3 nach oben bewegt, so kann die sich entspannende Membrane 4 so lange im Bereich des Innenrandes dem Steuerkolben 3 folgen, bis sie an dem Radialflansch 103 zur Anlage kommt. Ist der Radialflansch 103 als derart wirkender Anschlag nicht vorgesehen, so kann nur durch sorgfältige Auswahl des Materiales der Membrane 4 verhindert werden, daß diese über die dargestellte Entlüftungsstellung hinaus dem Steuerkolben 3 folgt und ihrerseits den Ringspalt 101 verschließt bzw. beeinträchtigt. Bei erfindungsgemäßer Anwendung des Radialflansches 103 als Membrananschlag kann das Material der Membrane ausgewählt werden, ohne daß auf diese Problematik geachtet werden muß. Andererseits ist erkennbar, daß die erfindungsgemäße Bemessung der Bohrung 100 ohne den Einsatz 102 von Vorteil ist, bei Verwendung des Einsatzes jedoch besonders vorteilhaft ist, um die Entlüftung zu ermöglichen.

Ohne die zentrale Bohrung 100 bzw. die Ausbildung des Anschlages als Hülse müßte demgegenüber im Bereich zwischen Oberseite des Zentralkörpers des Deckels 40 und Unterseite des Zentralkörpers des Deckels 40 und Unterseite der Membrane 4 eine Verbindung zwischen den Axialbohrungen 34 und dem Ringspalt 101 geschaffen werden.

## Patentansprüche

1. Elektrisches Ventil zum Steuern eines Fluides zwischen einer Fluidquelle (9) mit entsprechend hohem Druck, einem Verbraucher (19) und einer Fluidentlastung (A) mit entsprechend niederem Druck, wobei in einem ständig mit der Fluidquelle (9) verbundenen ringförmigen Teil (7a) einer Vorratskammer (7) ein Ventilglied (2) radialspielarm in Richtung der Vorratskammerlängsachse kontinuierlich verstellbar ist, wobei ein Rand (2a) des Ventilgliedes (2) eine Verbindung (18) zwischen dem Innenraum (35) des Ventilgliedes (2) und dem Verbraucher (19) umschließt, und wobei ein entgegengesetzt liegender, zweiter Rand (31) des Ventilgliedes (2) mit einer elastischen Membrane (4) zusammenwirkt, um bei Einhaltung eines Abstandes zu der elastischen Membrane den Innenraum (35) des Ventilgliedes (2) mit dem ringförmigen Teil (7a) der Vorratskammer (7) zu verbinden oder bei Aufliegen auf der Membrane die Verbindung zu unterbrechen, wobei dieser zweite Rand (31) einen Bereich umgrenzt, in dem innerhalb eines vom zweiten Rand (31) umgrenzten Strömungskanales (34) ein Zentralkörper (40a) des Ventilgliedes (2) als Widerlager für den eine zentrische Öffnung (22) der Membrane (4) umschließenden Rand der Membrane (4) angeordnet ist, die im Deckel (5) des Ventilgehäuses (1) an einer Fläche abgestützt ist, der gegenüber der Membrane im Bereich des nicht abgestützten Öffnungsrandes entfernt werden kann mit einem Steuerkolben (3), der mit einem Rand (43) in einen ringförmigen Strömungskanal (101), des Deckels (5) eintaucht, dessen Außendurchmesser größer ist als der Durchmesser der Öffnung (22) der Membrane (4) und dessen Innendurchmesser vom Außendurchmesser des Steuerkolbens (3) bestimmt wird, wobei der Verstellweg des Steuerkolbens unter der Einwirkung einer Fremdkraft (B) in Richtung einer Annäherung an die Membrane so bemessen ist, daß am Ende dieses Verstellweges die Membrane (4) im Bereich des die zentrische Membranenöffnung umschließenden Randes von der Abstützfläche für die Membrane entfernt und auf dem Widerlager (40a) zur Auflage gebracht ist und das Ventilglied (2) soweit verstellt ist, bis der zweite Ventilgliedrand (31) um ein vorbestimmtes Maß von der Membrane (4) freigekommen ist, während der Ausgangszustand vom Innendruck (P) im Ventilglied (2) wieder hergestellt wird, wenn dieser Innendruck (P) die Fremdkraft (b) um ein vorbestimmtes Maß überschritten hat, dadurch gekennzeichnet daß eine vom Widerlager (40a) umschlossene zentrische Membranenöffnung (100) so groß ist, daß ihr Querschnitt zusammen mit dem Querschnitt des Strömungskanales (34) zwischen Widerlager (40a) und zweitem Rand (31) des Ventilgliedes (2) etwa dem ringförmigen Querschnitt des Strömungskanales (101) zwischen Steuerkolben (3) und Außenwand (30) des Strömungskanales entspricht.

2. Ventil nach Anspruch 1, dadurch gekennzeichnet, daß der Querschnitt der vom Widerlager (40a) umschlossenen Öffnung (100) mindestens etwa dem Querschnitt des Strömungskanales (101) zwischen Steuerkolben (3) und Außenwand (30) des Strömungskanales entspricht.

3. Ventil nach Anspruch 2, dadurch gekennzeichnet, daß dem Widerlager (40a) im Bereich der Öffnung (100) ein Anschlag (103) zugeordnet ist, der ein Ausfedern der Membrane (4) im Umgebungsbereich ihrer zentrischen Öffnung (22) dann begrenzt, wenn der Steuerkolben (3) unter dem Einfluß des relativ zur auf den Steuerkolben (3) wirkenden Fremdkraft (b) überwiegenden Druckes im Innenraum des Ventilgliedes in seine Ausgangsstellung zurückkehrt.

4. Ventil nach Anspruch 3, dadurch gekennzeichnet, daß der Anschlag der Endflansch (103) einer in die Bohrung (100) des Widerlagers (40a) eingesetzten Hülse ist, deren Innenquerschnitt etwa dem Querschnitt des Strömungskanales (101) zwischen Steuerkolben (3) und Außenwand (30) des Strömungskanales entspricht.

5. Ventil nach Anspruch 4, dadurch gekennzeichnet, daß der äußere Durchmesser des Endflansches (103) kleiner ist als der Durchmesser einer vom Rand (43) des Steuerkolbens (3) umschlossenen Vertiefung (107) in der Steuerkolbenendfläche ist.

6. Ventil nach einem der Ansprüche 1 bis 5, dadurch gekennzeichnet, daß die Membrane (4) einen zylindrischen Axialflansch (108) aufweist, mit dem sie an der Wand (24) des ringförmigen Teiles (7a) der Vorratskammer (7) anliegt und Ventilgehäuse (1) und Ventildeckel (5) starr miteinander verbunden sind.

## Claims

1. Electric valve for controlling a fluid between a fluid source (9) with a correspondingly high pressure, a consumer (19), and a fluid relief (A) with a correspondingly low pressure, with, in an annular part (7a) of a storage chamber (7), which annular part is permanently connected to the fluid source (9), a valve member (2) being infinitely variable with little radial play in the direction of the storage chamber longitudinal axis, one edge (2a) of the valve member (2) enclosing a connection (18) between the interior space (35) of the valve member (2) and the consumer (19), and an opposing, second edge (31) of the valve member (2) cooperating with an elastic membrane (4), in order, whilst maintaining a spacing from the elastic membrane, to connect the interior space (35) of the valve member (2) to the annular part (7a) of the storage chamber (7), or, when resting on the membrane, to break the connection, this second edge (31) circumscribing an area in which within a flow channel (34) circumscribed by the second edge (31) a central body (40a) of the valve member (2) is arranged as a support for the edge of the membrane (4) enclosing a central opening (22) of the membrane (4), which is supported in the cover (5) of the valve housing (1) against a surface, which cover vis-a-vis the membrane can be removed in the area of the non-supported opening edge by means of a control piston (3) which with one edge (43) plunges into an annular flow channel (101) of the cover (5), whose external diameter is larger than the diameter of the opening (22) of the membrane (4) and whose internal diameter is determined by the external diameter of the control piston (3), the adjusting path of the control piston under the influence of an outside force (B) in the direction of approach to the membrane being so dimensioned that at the end of this adjusting path the membrane (4) in the area of the edge circumscribing the central membrane opening is removed from the supporting surface for the membrane and is brought to bear on the support (40a) and the valve member (2) is displaced until the second valve member edge (31) is freed from the membrane (4) to a predetermined extent, whilst the initial state is again restored by the internal pressure (P) in the valve member (2) once this internal pressure (P) has exceeded the outside force (b) to a pre-determined extent, characterized in that a central membrane opening (100) enclosed by the support (40a) is large enough for its cross-section together with the cross-section of the flow channel (34) between support (40a) and second edge (31) of the valve member (2) to correspond approximately to the annular cross-section of the flow channel (101) between control piston (3) and outer wall (30) of the flow channel.

2. Valve according to Claim 1, characterized in that the cross-section of the opening (100) enclosed by the support (40a) corresponds at least approximately to the cross-section of the flow channel (101) between control piston (3) and outer wall (30) of the flow channel.

3. Valve according to Claim 2, characterized in that the support (40a) in the area of the opening (100) is allocated a stop (103) limiting the amount by which the membrane (4) can spring out in the peripheral area of its central opening (22) when the control piston (3) returns to its initial position under the influence of the pressure which is predominant in the internal chamber of the valve member in relation to the outside force (b) acting on the control piston (3).

4. Valve according to Claim 3, characterized in that the stop is the end flange (103) of a sleeve fitted into the bore (100) of the support (40a), whose internal cross-section corresponds approximately to the cross-section of the flow channel (101) between control piston (3) and outer wall (30) of the flow channel.

5. Valve according to Claim 4, characterized in that the external diameter of the end flange (103) is smaller than the diameter of a recess (107) enclosed by the edge (43) of the control piston (3) in the control piston end face.

6. Valve according to one of Claims 1 to 5, characterized in that the membrane (4) has a cylindrical axial flange (108), by means of which it abuts against the wall (24) of the annular part (7a) of the storage chamber (7) and by means of which valve housing (1) and valve cover (5) are rigidly connected to one another.

**Revendications**

1. Electrovanne pour la commande d'un fluide entre une source de fluide (9) à pression suffisamment élevée, un dispositif utilisateur (19) et un échappement de fluide (A) à pression suffisamment basse, un élément de vanne (2) pouvant être déplacé - avec un faible jeu radial - en continu dans la direction de l'axe longitudinal de la chambre-réservoir à l'intérieur d'une partie annulaire (7a) de celle-ci qui est reliée en permanence à la source de fluide (9), un bord (2a) dudit élément de vanne (2) entourant une liaison (18) entre l'espace intérieur (35) de l'élément de vanne (2) et le dispositif utilisateur (19), un deuxième bord (31) de l'élément de vanne (2), situé à l'opposé, coopérant avec une membrane élastique (4) pour relier l'espace intérieur (35) de l'élément de vanne (2) à la partie annulaire (7a) de la chambre-réservoir (7) lorsqu'il est maintenu à une certaine distance par rapport à la membrane élastique, ou bien pour interrompre la liaison lorsqu'il porte sur la membrane, ce deuxième bord (31) définissant une région dans laquelle, à l'intérieur d'un canal de circulation (34) limité par le deuxième bord (31), un corps central (40a) de l'élément de vanne (2) est disposé en tant que butée pour le bord de la membrane (4) entourant une ouverture centrale (22) de celle-ci, ladite membrane etant supportée par une face du couvercle (5) du corps (1) de la vanne, la région de ladite membrane bordant son ouverture n'étant pas supportée et pouvant être écartée du couvercle (5) par un piston de commande (3) dont un bord (43) plonge dans un canal de circulation annulaire (101) du couvercle (5), dont le diamètre extérieur est plus grand que le diamètre de l'ouverture (22) de la membrane (4) et dont le diamètre intérieur est déterminé par le diamètre extérieur du piston de commande (3), la course du piston de commande, sous l'action d'une force extérieure (B) pour le rapprocher de la membrane, étant déterminée de manière telle qu'à la fin de cette course, la membrane (4) s'appuie, dans la région bordant son ouverture centrale, sur le corps central (40a) tout en étant éloigné de la face de support et que l'élément de vanne (2) soit déplacé jusqu'à ce que le deuxième bord (31) de cet élément se soit écarté d'une valeur prédéterminée de la membrane (4), tandis que l'état de départ est rétabli par la pression (P) régnant à l'intérieur de l'élément de vanne (2) lorsque cette pression (P) dépasse la force extérieure (B) d'une certaine valeur, caractérisée en ce que l'ouverture centrale (100) de la membrane, entourée par le corps central (40a), présente une dimension telle que la somme de sa section droite et de la section droite d'un canal de circulation (34) située entre le corps central (40a) et la deuxième bord (31) de l'élément de vanne (2) correspond sensiblement à la section annulaire du canal de circulation (101) formée entre le piston de commande (3) et la paroi extérieure (30) du canal de circulation.

2. Vanne selon la revendication 1, caractérisée en ce que la section droite de l'ouverture (100) entourée par le corps central (40a) correspond au moins sensiblement à la section droite du canal de circulation (101) formée entre le piston de commande (3) et la paroi extérieure (30) du canal de circulation.

3. Vanne selon la revendication 2, caractérisée en ce qu'au corps central (40a) est associée, dans la région de l'ouverture (100), une butée (103) qui limite une détente de la membrane (4) dans la région entourant son ouverture centrale (22) lorsque le piston de commande (3) retourne dans la position de départ sous l'influence d'une pression dans l'espace intérieur de l'élément de vanne, supérieure à la force extérieure (b) agissant sur ledit piston.

4. Vanne selon la revendication 3, caractérisée en ce que la butée consiste en la collerette terminale (103) d'une douille placée dans l'alésage (100) du corps central (40a), le diamètre intérieur de cette douille correspondant sensiblement à la section droite du canal de circulation (101) entre le piston de commande (3) et la paroi extérieure (30).

5. Vanne selon la revendication 4, caractérisée en ce que le diamètre extérieur de la collerette terminale (103) est plus petit que le diamètre d'un creux (107) formé dans la surface terminale du piston de commande et entouré par un bord (43) de ce piston de commande (3).

6. Vanne selon l'une des revendications 1 à 5, caractérisée en ce que la membrane (4) présente une bride axiale cylindrique (108) par laquelle elle s'appuie sur la paroi (24) de la partie annulaire (7a) de la chambre réservoir (7), et en ce que le corps (1) et le couvercle (5) de la vanne sont rigidement connectés.

B

A

5
43
3
107
101
30
31
1

4
22
108
103
102
100
34
40a
40
39
2
P
7a
von
Druckmittelquelle 9
24
35
8
7
10
2a
18
7b

zum Verbraucher
19